# EUROPEAN PATENT APPLICATION

(11) **EP 4 686 175 A1**
(43) Date of publication of application: **28.01.2026**
(21) Application number: 24191207.0
(22) Date of filing: 26.07.2024
(51) Int. Cl.: H04L 67/12, H04L 69/18, H04L 69/40

(54) **SYSTEM AND METHOD FOR AUTOMATED SWITCHING OF COMMUNICATION ELEMENT**

(71) Applicant: Siemens Aktiengesellschaft, 80333 München (DE)
(72) Inventor: KUMAR, Mithun, 560028 Bangalore, Karnataka (IN); PATIL, Kalagoud, 591222 Belagavi (IN)
(74) Representative: Isarpatent

(57) **Abstract**

A system and method for automated switching of communication element. The system comprises at least one controller (102), a control center device (104) communicatively connected to the controller (102), and a communication network (106) enabling bidirectional communication between the controller (102) and the control center device (104). The communication network (106) comprises at least two transport layers (108) comprising one primary transport layer (110) and at least one secondary transport layer (112a, 112b). Further, the communication network (106) comprises a plurality of communication protocols (114) including one primary protocol (116) and at least one secondary protocol (118a, 118b). If the control center device (104) detects failure of the primary transport layer (110), the control center device (104) switches to one of the secondary transport layers (112a, 112b) or switches to one of the secondary transport layers (112a, 112b) and one of the secondary protocols (118a, 118b) to enable communication.

## Description

The present disclosure relates to industrial control systems and more particularly relates to an industrial control system with automated switching of communication element such as transport layer or communication protocol.

Modern industries employ control systems to assert control, monitor and analyze the industrial devices and processes. The usage of such control system improves the quality and efficiency of the industrial devices and processes. The control system is commonly known as Supervisory Control and Data Acquisition (SCADA) typically includes multiple remote controllers deployed at various regions to collect data, and the data that is collected is processed by a central control unit. The central control unit further performs actions to ensure that the processes meet the desired standards.

In industrial control systems, the elements such as central control unit and remote controllers are communicatively connected with each other through communication networks. These communication networks aid in enabling seamless sharing of data such as tags between the devices. Typically, communication networks comprise transport layer such as optical fiber, GPRS, so on and so forth which connect various elements of the control system. Further, communication protocols are implemented on these transport layers to enable transfer of data between the various elements of the control system.

The communication network is susceptible to failure, wherein the failure may be due to failure of the transport layer or failure of the communication protocol. The failure of communication network results in failure of transmission of crucial data from sensors to the central control system (SCADA). Therefore, the central control system cannot take an informed decision leading to disruption of the functioning of the control system.

In light of the above, there exists a need for a system and a method to enable communication in a control system when there is a failure of transport layer or communication protocol.

Therefore, it is an object of this invention to provide a system and a method for automated switching of a communication element in an industrial control system.

The object of the present invention is achieved by an industrial control system with automated switching of a communication element as disclosed herein.

The industrial control system referred in the disclosure may relate to a combination of hardware and software modules designed to monitor, manage, and control industrial processes. These systems may include devices, networks, and interfaces that oversee and regulate machinery and processes in industries. As an example, the industrial control system may include Supervisory Control and Data Acquisition (SCADA) systems, Distributed Control Systems (DCS), or any other control system configurations that ensure safe and efficient operation of industries. The object of the present invention is achieved by an industrial control system comprising at least one controller, a control center device communicatively connected to the controller, and a communication network enabling bidirectional communication between the controller and the control center device. The communication network enables transfer of I/O tag data between the controller and the control center device. The communication network comprises at least two transport layers comprising one primary transport layer and at least one secondary transport layer. The transport layers are connected between the controller and the control center device. Further, the communication network comprises a plurality of communication protocols including one primary protocol and at least one secondary protocol configured to enable communication via transport layers. The control center device is configured to detect failure of the primary transport layer causing the failure of communication between the control center device and the controller. Further, if the control center device detects failure of the primary transport layer, the control center device is configured to switch to one of the secondary transport layers to enable communication between the control center device and the controller, wherein the I/O tags that are marked as critical is transferred between the control center device and the controller via the primary protocol and the secondary transport layer. Alternatively, the control center device is configured to switch to one of the secondary transport layers and one of the secondary protocols, wherein the transfer of I/O tags between the control center device and the controller is enabled through the secondary transport layer and the secondary protocol.

Advantageously, whenever communication between the controller and the control center device is interrupted due to failure of primary transport layer, the control center device automatically switches to a secondary transport layer with a primary protocol or switches to a secondary transport layer with a secondary protocol. Such configuration ensures that data transfer between the controller and the control center device is not affected even if the primary transport layer fails.

The communication element referred herein may refer to any module or element that enables communication between the controller and the control center device. As an example, the communication element may include transport layer, communication protocol, or any other similar means that enables communication. Transport layer herein may refer to a medium for enabling communication such as Optical Fiber, Wi-Fi, GPRS so on and so forth. Communication protocols define the rules and conventions for exchanging messages between the controller and the control center device, enabling seamless communication. Some of the examples of communication protocols 114 include DNP3, Modbus, IEC60870 so on and so forth.

The term "controller" in this disclosure may refer to devices including but not limited to Programmable Logic Controller (PLC), Remote Terminal Unit (RTU) or the like. Typically, in an industrial control system, multiple controllers are deployed in the field to fetch data which then is further communicated with the control center device. The control center device processes the received data to take further action.

The term "control center device" in this disclosure may refer to a computerized system that is connected to multiple controllers deployed in an industrial control system. The control center device is configured to receive data from the controllers and process the received data to take corresponding action.

According to an embodiment of the present invention, the control center device is further configured to detect failure of the primary protocol causing the failure of communication between the control center device and the controller. If failure of the primary protocol is detected, the control center device is configured to switch to one of the secondary protocols to enable communication between the control center device and the controller, wherein the I/O tags are transferred between the control center device and the controller via the secondary protocol and the primary transport layer.

Advantageously, when the primary protocol fails causing communication between the controller and the control center device to fail, the control center device switches to a secondary protocol to establish communication between the controller and the control center device. Such configuration avoids any stoppage in communication between the controller the control center device even if the primary protocol fails.

According to an embodiment of the present invention, the control center device is configured to map the I/O tags received from the controller to a new set of I/O tags corresponding to the secondary protocol in the control center device when the communication protocol has switched from a primary protocol to the secondary protocol.

According to an embodiment of the present invention, the control center device is configured to mark the I/O tags that are critical based on user input.

Advantageously, when the bandwidth of the transport layer is reduced, I/O tags that are marked critical are transferred from the controller to the control center device. Therefore, the transfer of critical data is not interrupted when there is a reduction in bandwidth of the primary transport layer due to damage of the primary transport layer.

According to an embodiment of the present invention, the control center device is configured to detect failure of primary protocol. If failure of primary protocol is detected, the control center device is configured to select a secondary protocol by sequentially checking the health status of the secondary protocols until a healthy secondary protocol is identified and select the identified secondary protocol. Further, the control center device is configured to transfer the I/O tags from controller to the control center device via the selected secondary protocol.

Advantageously, the control center device can select a healthy secondary protocol among the plurality of communication protocol when the primary protocol fails. This ensures that a healthy secondary protocol enables communication between the controller and the control center device.

According to an embodiment of the present invention, the control center device is configured to check whether the failure of primary protocol is corrected and communication through primary protocol is possible, after switching to the secondary protocol. Further, if the failure of primary protocol is corrected and communication through primary protocol is possible, the control center device switches to primary protocol for transferring I/O tags between the controller and the control center device.

According to an embodiment of the present invention, the control center device is configured to detect whether the bandwidth of the primary transport layer is below the normal range. If a reduction in bandwidth is detected, the control center device is configured to switch to one of the secondary protocols or one of the secondary transport layers based on user input, suitable for the reduced bandwidth. The control center device is further configured to transfer I/O tags from the controller to the control center device via the secondary transport layer and/or the secondary protocol.

The object of the present invention is achieved by a control center device comprising at least one processor, and a memory unit communicatively coupled to the processor. The memory unit comprises one or modules stored in the form of machine-readable instructions executable by the one or more processing units. The one or more modules are configured to perform steps described above.

The object of the present invention is achieved by a computer-program product having machine-readable instructions stored therein, which when executed by a processor, cause the processor to perform a method as describe above.

The object of the present invention is also achieved by a computer-readable storage medium comprising instructions which, when executed by a computer, cause the computer to perform a method as describe above.

The object of the present invention is achieved by method for automated switching of a communication element in an industrial control system as disclosed herein.

The method comprises enabling bidirectional communication to transfer I/O tags between a controller and a control center device. The bidirectional communication is enabled using a communication network comprising transport layers and communication protocols.

The communication element that is switched automatically may be the transport layer or the communication protocol. The communication network comprises at least two transport layers, a plurality of communication protocols. The transport layers comprise one primary transport layer and at least one secondary transport layer. The plurality of communication protocols comprises one primary protocol and at least one secondary protocol.

The method comprises detecting, by the control center device, failure of a primary transport layer causing the failure of communication between the control center device and the controller.

If failure of the primary transport layer is detected, the method comprises switching to one of the secondary transport layers to enable communication between the control center device and the controller. Further, the I/O tags that are marked as critical is transferred between the control center device and the controller via the primary protocol and the secondary transport layer.

Advantageously, transferring of I/O tags that are marked as critical ensures that the bandwidth available with the secondary transport layer is utilized optimally and no interruption in transfer for critical I/O tags occurs.

According to an embodiment of the present invention, the method comprises marking the I/O tags that are critical based on user input.

Advantageously, when the bandwidth of the transport layer is reduced, I/O tags that are marked as critical are transferred from the controller to the control center device.

Alternatively, if failure of the primary transport layer is detected, the method comprises switching to one of the secondary transport layers and one of the secondary protocols, wherein the transfer of I/O tags between the control center device and the controller is enabled through the secondary transport layer and the secondary protocol.

The method comprises detecting failure of the primary protocol causing the failure of communication between the control center device and the controller.

If failure of the primary protocol is detected, the method comprises switching to one of the secondary protocols to enable communication between the control center device and the controller, wherein the I/O tags are transferred between the control center device and the controller via the secondary protocol and the primary transport layer.

Advantageously, when the primary protocol fails, the control center device automatically switches to a secondary protocol to establish communication between the controller and the control center device.

According to an embodiment of the present invention, the method comprises mapping the I/O tags received from the controller to a new set of I/O tags corresponding to the secondary protocol in the control center device, when the communication protocol has switched from a primary protocol to the secondary protocol.

According to an embodiment of the present invention, the method comprises detecting failure of the primary protocol. If failure of the primary protocol is detected, the method comprises selecting a secondary protocol by sequentially checking the health status of the secondary protocols until a healthy secondary protocol is identified and select the identified secondary protocol.

Advantageously, selecting a secondary protocol from a plurality of secondary protocols ensures that the selected secondary protocol is healthy and can effectively enable communication between the controller and the control center device.

The method comprises transferring the I/O tags from controller to the control center device via the selected secondary protocol.

According to an embodiment of the present invention, the method comprises checking whether the failure of primary protocol is corrected and communication through primary protocol is possible, after switching to the secondary protocol.

If the failure of primary protocol is corrected and communication through primary protocol is possible, the method comprises switching to primary protocol for transferring I/O tags between the controller and the control center device.

According to an embodiment of the present invention, the method comprises detecting whether the bandwidth of the primary transport layer is below the normal range. If a reduction in bandwidth is detected, the method comprises transferring I/O tags from the controller to the control center device via the primary transport layer and the secondary protocol.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1: illustrates an industrial control system, in accordance with one embodiment of the present invention;
- FIG 2: illustrates a schematic of an industrial control system with transport layer switching, in accordance with one embodiment of the present invention;
- FIG 3: illustrates a schematic of an industrial control system with transport layer and communication protocol switching, in accordance with one embodiment of the present invention;
- FIG 4: illustrates a schematic of an industrial control system with communication protocol switching, in accordance with one embodiment of the present invention;
- FIG 5: illustrates a flowchart of a method of switching transport layer in an industrial control system, in accordance with one embodiment of the present invention;
- FIG 6: illustrates a flowchart of a method of switching transport layer and communication protocol in an industrial control system, in accordance with one embodiment of the present invention;
- FIG 7: illustrates a flowchart of a method of switching communication protocol in an industrial control system, in accordance with one embodiment of the present invention;
- FIG 8: illustrates a flowchart of a method of switching transport layer or communication protocol in an industrial control system, in accordance with one embodiment of the present invention; and
- FIG 9: illustrates a flowchart of a method of selecting a communication protocol in an industrial control system, in accordance with one embodiment of the present invention;

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

The present invention relates to an industrial control system for controlling, monitoring, and analyzing industrial devices and processes. The term "control center device" in this disclosure may refer to control systems including but not limited to Supervisory Control and Data Acquisition (SCADA). The term "controller" in this disclosure may refer to devices including but not limited to Programmable Logic Controller (PLC), Remote Terminal Unit (RTU) or the like. Typically, in an industrial control system, multiple controllers are deployed in the field to fetch data which then is further communicated with the control center device. The control center device processes the received data to take further action.

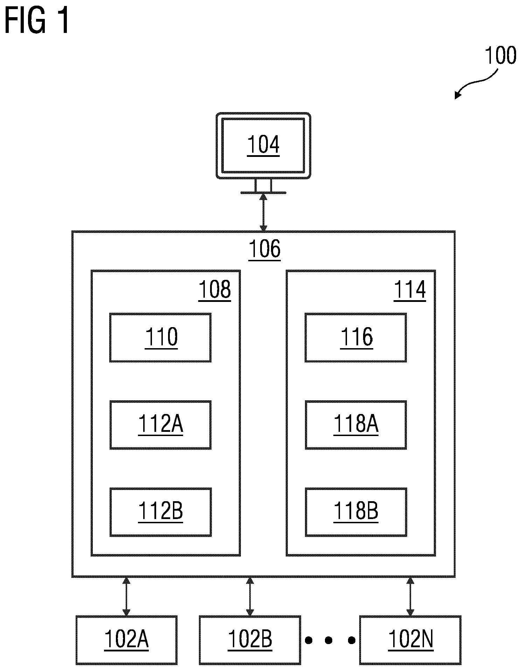

FIG. 1 illustrates an industrial control system 100, in accordance with one embodiment of the present invention. The industrial control system 100 comprises at least one controller (102a, 102b, 102n) such as PLC or RTU which is connected with at least one field device such as a sensor, a control center device 104 communicatively connected to the controller 102, and a communication network 106 enabling bidirectional communication between the controller 102 and the control center device 104.

The control center device 104 may be a device such as central processing unit comprising at least one processor, a memory unit comprising a set of instructions, input devices, and output devices.

The processor, as used herein, means any type of computational circuit, such as, but not limited to, a microprocessor, microcontroller, complex instruction set computing microprocessor unit, reduced instruction set computing microprocessor, very long instruction word microprocessor, explicitly parallel instruction computing microprocessor, graphics processing unit, digital signal processing unit, or any other type of processing circuit. The processor may also include embedded controller, such as generic or programmable logic devices or arrays, application specific integrated circuits, single-chip computers, or the like.

The memory unit may be non-transitory volatile memory and non-volatile memory. The memory unit may be coupled for communication with the processor, such as being a computer-readable storage medium. The processor unit may execute machine-readable instructions and/or source code stored in the memory unit. A variety of machine-readable instructions may be stored in and accessed from the memory unit. The memory unit may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The communication network 106 enables transferring I/O tag data between the controller 102 and the control center device 104. The I/O tag may be a data point or an object that may contain a value, timestamp, parameters or the like. In other words, I/O tags contain data that are necessary for the operation of the industrial control system 100s.

The communication network 106 comprises at least two transport layers 108, and a plurality of communication protocols 114. The transport layers 108 comprise one primary transport layer 110 and at least one secondary transport layer (112a, 112b) . In FIG. 1, two secondary transport layers (112a, 112b) are depicted however the communication network 106 may comprise more than two secondary transport layers (112a, 112b). The transport layers 108 are connected between the controller 102 and the control center device 104. Transport layer herein may refer to a medium for enabling communication such as Optical Fiber, Wi-Fi, GPRS so on and so forth.

The communication protocol 114 comprises one primary protocol 116 and at least one secondary protocol (118a, 118b). In FIG. 1 two secondary protocols (118a, 118b) are depicted however the communication network 106 may comprise more than two secondary protocols (118a, 118b). The communication protocols 114 enable transfer of data between the controller 102 and the control center device 104 via the transport layer. Some of the examples of communication protocols 114 include DNP3, Modbus, IEC60870 so on and so forth.

The central control device is configured to detect failure of the primary transport layer 110, wherein the failure causes the failure of communication between the controller 102 and the control center device 104.

If failure of the primary transport layer 110 is detected, control center device 104 is configured to switch to one of the secondary transport layers (112a, 112b) to enable communication between the control center device 104 and the controller 102, wherein the I/O tags that are marked as critical is transferred between the control center device 104 and the controller 102 via the primary protocol 116 and the secondary transport layer (112a, 112b) .

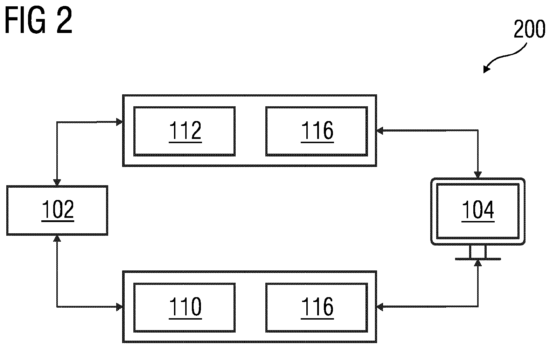

FIG. 2 illustrates a schematic 200 of an industrial control system 100 with transport layer switching, in accordance with one embodiment of the present invention. Initially, the control center device 104 communicates with the controller 102 via the primary transport layer 110 and the primary protocol 116. If the control center device 104 detects failure of primary protocol 116, the control center device 104 switches to a secondary transport layer (112a, 112b) without changing the primary protocol 116, provided the primary protocol 116 is healthy. Therefore, the I/O tags are transferred from the controller 102 to the control center device 104 through the secondary transport layer (112a, 112b) and the primary protocol 116.

However, in some cases, the bandwidth of the secondary transport layer (112a, 112b) may be lesser than the bandwidth of the primary transport layer 110. In such scenario, only the I/O tags that are marked as critical may be shared from the controller 102 to the control center device 104. As an example, the bandwidth of Optical Fiber is higher than the bandwidth of GPRS. Therefore, only critical I/O tags are shared when the transport layer switches from Optical Fiber to GPRS.

In one embodiment, the central control device may be configured to mark the I/O tags that are critical based on user input. The user at an initial stage of configuring the industrial control system 100 may mark the I/O tags that are critical.

Alternatively, in another embodiment, if failure of the primary transport layer 110 is detected, control center device 104 is configured to switch to one of the secondary transport layers (112a, 112b) and one of the secondary protocols (118a, 118b), wherein the transfer of I/O tags between the control center device 104 and the controller 102 is enabled through the secondary transport layer (112a, 112b) and the secondary protocol (118a, 118b).

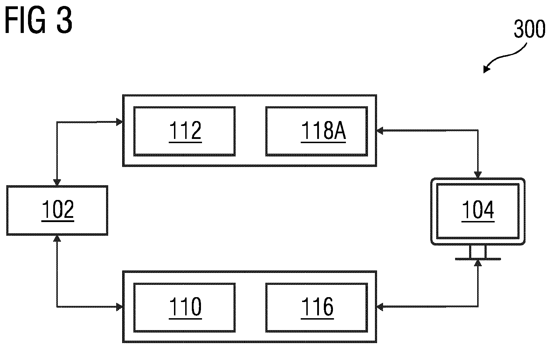

FIG. 3 illustrates a schematic 300 of an industrial control system 100 with transport layer and communication protocol switching, in accordance with one embodiment of the present invention. Initially, the control center device 104 communicates with the controller 102 via the primary transport layer 110 and the primary protocol 116. If the control center device 104 detects failure of primary transport layer 110, the control center device 104 switches to a secondary transport layer (112a, 112b) and a secondary protocol (118a, 118b). Therefore, the I/O tags are transferred from the controller 102 to the control center device 104 through the secondary transport layer (112a, 112b) and the secondary protocol (118a, 118b). As an example, initially the data was transferred through Optical Fiber and DNP3 protocol, later the data is transferred through GPRS and Modbus protocol.

Therefore, in the event of failure of a primary transport layer 110, the control center device 104 can either switch to secondary transport layer (112a, 112b) without changing the primary protocol 116 or switch to secondary transport layer (112a, 112b) and switch to secondary protocol (118a, 118b). The control center device 104 may perform any of the two actions based on user requirement.

According to an embodiment, the control center device 104 is configured to detect failure of primary protocol 116 that causes a failure in communication between the controller 102 and the control center device 104. If failure of primary protocol 116 is detected, the control center device 104 is configured to switch to a secondary protocol, wherein the I/O tags are transferred from the controller 102 to the control center device 104 through the primary transport layer 110 and the secondary protocol (118a, 118b).

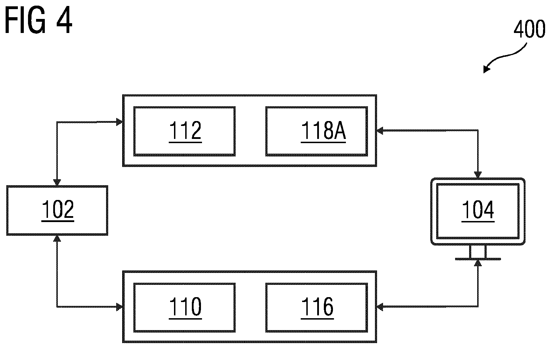

FIG. 4 illustrates a schematic 400 of an industrial control system 100 with communication protocol switching, in accordance with one embodiment of the present invention. Initially, the control center device 104 communicates with the controller 102 via the primary transport layer 110 and the primary protocol 116. If the control center device 104 detects failure of primary protocol 116, the control center device 104 switches to a secondary protocol (118a, 118b). Therefore, the I/O tags are transferred from the controller 102 to the control center device 104 through the primary transport layer 110 and the secondary protocol, provided the primary transport layer 110 is healthy.

According to an embodiment of the present invention, control center device 104 is configured to map the I/O tags received from the controller 102 to a new set of I/O tags corresponding to the secondary protocol (118a, 118b) in the control center device 104 when the communication protocol has switched from a primary protocol 116 to the secondary protocol (118a, 118b).

During mapping of I/O tags, the data type for the protocol switchover is converted accordingly. The below table illustrates data type conversion for protocol switching between DNP3 protocol and Modbus protocol.

**Table 1**

| Data Type | Modbus | DNP |
|---|---|---|
| Boolean Inputs | Discrete Input | Binary Input |
| Boolean Outputs | Coil | Control Relay Output Block (CROB) |
| 16-bit Input | Input Register | 16-bit Counter 16-bit |
| | | Frozen Counter16-bit |
| | | Analog Input 16-bit |
| | | Frozen Analog Input |
| 16-bit Output | Holding Register | 16-bit Analog Output Block |

Accordingly, the polling architecture is also reconfigured based on the switching of the communication protocol.

The control center device 104 is further configured to detect failure of the primary protocol 116. If failure of the primary protocol 116 is detected, the control center device 104 is configured to select a secondary protocol (118a, 118b) by sequentially checking the health status of the secondary protocols (118a, 118b) until a healthy secondary protocol (118a, 118b)is identified and select the identified secondary protocol (118a, 118b). This ensures that, if there are more than two secondary protocols (118a, 118b), a secondary protocol (118a, 118b) that is healthy is selected for transferring data between the controller 102 and the control center device 104.

In cases where the control center device 104 has switched to a secondary protocol, the control center device 104 is configured to periodically check whether the failure of primary protocol 116 is corrected and communication through primary protocol 116 is possible, after switching to the secondary protocol (118a, 118b). If failure of primary protocol 116 is corrected and communication through primary protocol 116 is possible, the control center device 104 is configured to switch to the primary protocol 116 for transferring I/O tags between the controller 102 and the control center device 104.

The control center device 104 is configured to detect whether the bandwidth of the primary transport layer 110 is below the normal range. In cases where the transport layer is subject to physical damage such as a cut, the bandwidth of the transport layer may be reduced. If a reduction in bandwidth is detected, then the control center device 104 is configured to switch to one of the secondary protocols (118a, 118b) or one of the secondary transport layers (112a, 112b) based on user input. Further, I/O tags are transferred from the controller 102 to the control center device 104 via the secondary transport layer (112a, 112b) and/or the secondary protocol (118a, 118b).

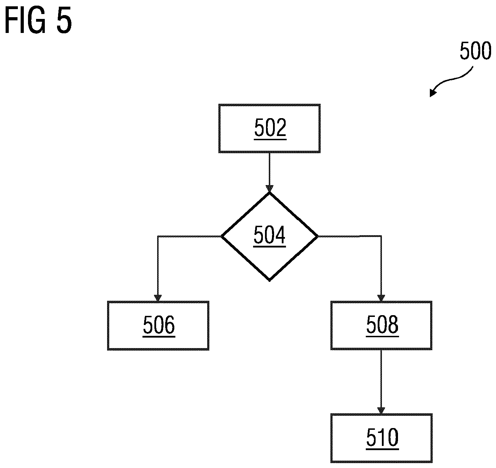

FIG. 5 illustrates a flowchart 500 of a method of switching transport layer in an industrial control system 100, in accordance with one embodiment of the present invention. At step 502, communication between the controller 102 and the control center device 104 is enabled through the primary transport layer 110 and the primary protocol 116.

At step 504, the control center device 104 detects whether the primary transport layer 110 has failed.

If the primary transport layer 110 has not failed, then at step 506, the I/O tags are transferred from the controller 102 to the control center device 104 through the primary transport layer 110 and the primary protocol 116, provided the primary protocol 116 is healthy.

If the primary transport layer 110 has failed, then at step 508, the control center switches to a secondary transport layer (112a, 112b) to enable communication between the controller 102 and the control center device 104.

At step 510, the I/O tags are transferred from the controller 102 to the control center device 104 through the secondary transport layer (112a, 112b) and the primary protocol 116, provided the primary protocol 116 is healthy.

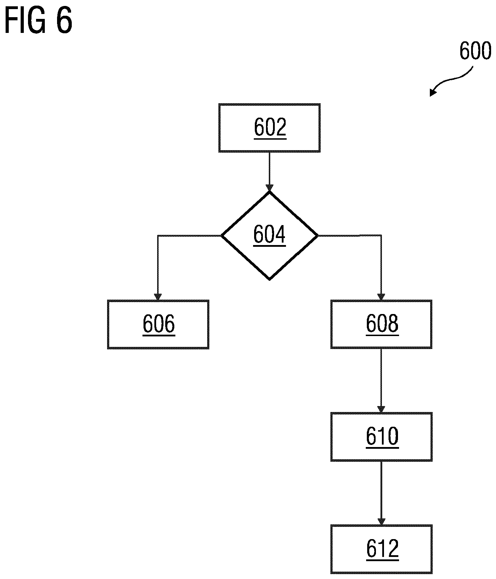

FIG. 6 illustrates a flowchart 600 of a method of switching transport layer and communication protocol in an industrial control system 100, in accordance with one embodiment of the present invention. At step 602, communication between the controller 102 and the control center device 104 is enabled through the primary transport layer 110 and the primary protocol 116.

At step 604, the control center device 104 detects whether the primary transport layer 110 has failed.

If the primary transport layer 110 has not failed, then at step 606, the I/O tags are transferred from the controller 102 to the control center device 104 through the primary transport layer 110 and the primary protocol 116, provided the primary protocol 116 is healthy.

If the primary transport layer 110 has failed, then at step 608, the control center switches to a secondary transport layer (112a, 112b) and a secondary protocol (118a, 118b) to enable communication between the controller 102 and the control center device 104.

At step 610, the I/O tags that are received from the controller 102 are mapped to a new set of I/O tags corresponding to the secondary protocol (118a, 118b) in the control center device 104.

At step 612, the I/O tags are transferred from the controller 102 to the control center device 104 through the secondary transport layer (112a, 112b) and the secondary protocol (118a, 118b).

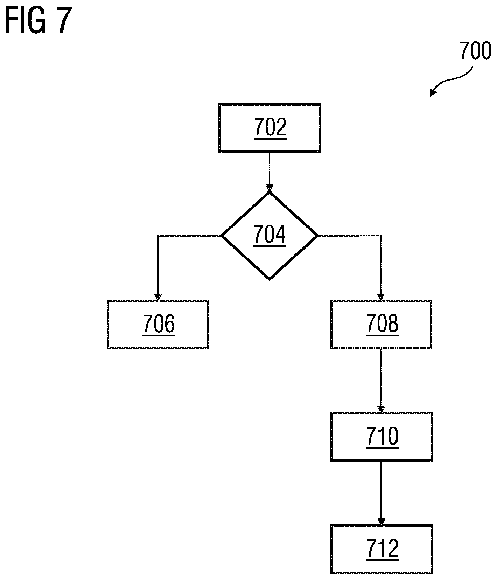

FIG. 7 illustrates a flowchart 700 of a method of switching communication protocol in an industrial control system 100, in accordance with one embodiment of the present invention. At step 702, communication between the controller 102 and the control center device 104 is enabled through the primary transport layer 110 and the primary protocol 116.

At step 704, the control center device 104 detects whether the primary protocol 116 has failed.

If the primary protocol 116 has not failed, then at step 706, the I/O tags are transferred from the controller 102 to the control center device 104 through the primary transport layer 110 and the primary protocol 116, provided the primary transport layer 110 is healthy.

If the primary protocol 116 has failed, then at step 708, the control center device 104 switches to a secondary protocol (118a, 118b) to enable communication between the controller 102 and the control center device 104.

At step 710, the I/O tags that are received from the controller 102 are mapped to a new set of I/O tags corresponding to the secondary protocol (118a, 118b) in the control center device 104.

At step 712, the I/O tags are transferred from the controller 102 to the control center device 104 through the primary transport layer 110 and the secondary protocol (118a, 118b).

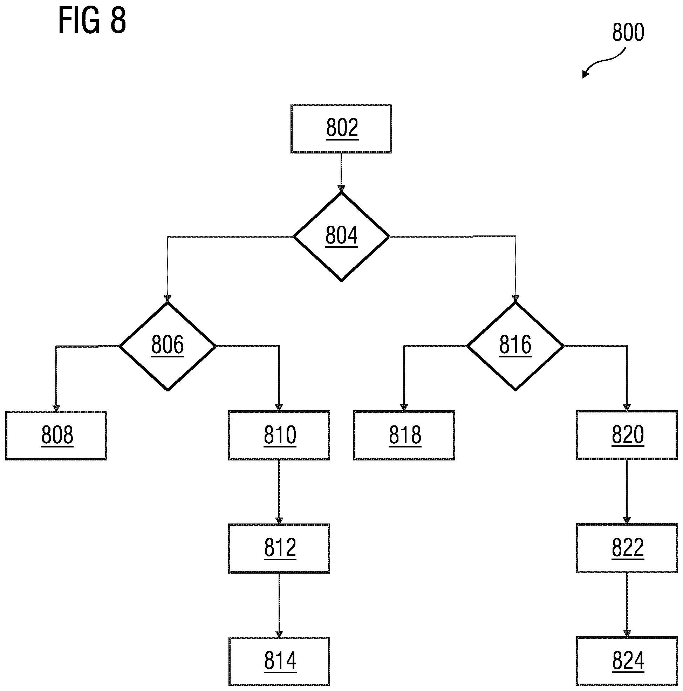

FIG. 8 illustrates a flowchart 800 of a method of switching transport layer or communication protocol in an industrial control system 100, in accordance with one embodiment of the present invention. At step 802, initially, the communication between the controller 102 and the control center device 104 is enabled through the primary transport layer 110 and the primary protocol 116.

At step 804, the control center device 104 detects whether the primary transport layer 110 has failed.

If the primary transport layer 110 has not failed, then further at step 806, the control center device 104 detects if the primary protocol 116 has failed.

If both the primary transport layer 110 and the primary protocol 116 has not failed, then at step 808, the I/O tags are transferred from the controller 102 to the control center device 104 through the primary transport layer 110 and the primary protocol 116.

If the primary protocol 116 has failed, then at step 810, the control center device 104 switches to a secondary protocol (118a, 118b) to enable communication between the controller 102 and the control center device 104.

At step 812, the I/O tags that are received from the controller 102 are mapped to a new set of I/O tags corresponding to the secondary protocol (118a, 118b) in the control center device 104.

At step 814, the I/O tags are transferred from the controller 102 to the control center device 104 through the primary transport layer 110 and the secondary protocol (118a, 118b).

If the primary transport layer 110 has failed, then at step 816, the control center detects if the primary protocol 116 has failed.

If the secondary protocol (118a, 118b) has not failed, then at step 818, the control center device 104 switches to a secondary transport layer (112a, 112b) and the I/O tags are transferred from the controller 102 to the control center device 104 through the secondary transport layer (112a, 112b) and the primary protocol 116.

If the secondary protocol (118a, 118b) has failed, then at step 820, the control center device 104 switches to a secondary transport layer (112a, 112b) and a secondary protocol (118a, 118b) to enable communication between the controller 102 and the control center device 104.

At step 822, the I/O tags that are received from the controller 102 are mapped to a new set of I/O tags corresponding to the secondary protocol (118a, 118b) in the control center device 104.

At step 824, the I/O tags are transferred from the controller 102 to the control center device 104 through the secondary transport layer (112a, 112b) and the secondary protocol (118a, 118b).

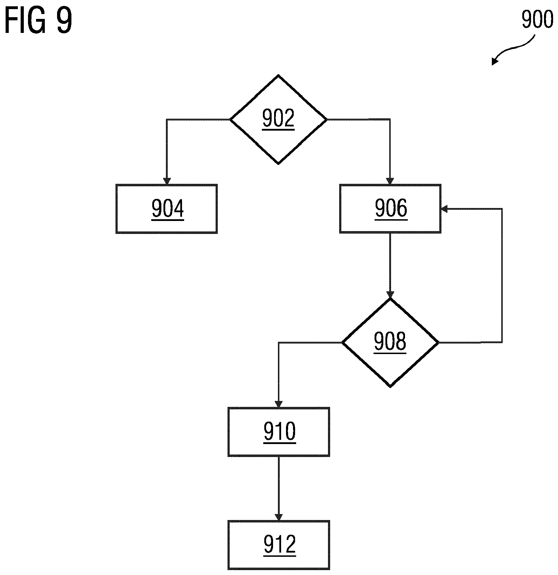

FIG. 9 illustrates a flowchart 900 of a method of selecting a communication protocol in an industrial control system 100, in accordance with one embodiment of the present invention. At step 902, the failure of primary protocol 116 is detected by the control center device 104.

If failure of primary protocol 116 is not detected, then at step 902, the I/O tags are transferred from the controller 102 to the control center device 104 through the primary protocol 116.

If failure primary protocol 116 is detected, then at step 906, a secondary protocol (118a, 118b) is selected among a plurality of secondary protocols (118a, 118b).

At step 908, the health of the selected secondary protocol (118a, 118b) is checked by the control center device 104.

If the selected secondary protocol (118a, 118b) is healthy, then at step 910, the I/O tags that are received from the controller 102 are mapped to a new set of I/O tags corresponding to the secondary protocol (118a, 118b)in the control center device 104.

Further, at step 912, the I/O tags are transferred from the controller 102 to the control center device 104 through the secondary protocol (118a, 118b).

If the selected protocol is not healthy, then step 906 is performed, wherein the next secondary protocol (118a, 118b) among the plurality of secondary protocols (118a, 118b) is selected for checking health status.

Thus, a secondary protocol (118a, 118b) is selected from a plurality secondary protocol (118a, 118b)by sequentially checking the health status of the protocols.

According to an embodiment of the present invention, the method further comprises checking whether the failure of primary protocol 116 is corrected and communication through primary protocol 116 is possible, after switching to the secondary protocol (118a, 118b). The control center device 104 may periodically check of the primary protocol 116 is healthy and communication through it is possible.

If communication through the primary protocol 116 is possible, then, the communication is switched to the primary protocol 116 from the secondary protocol (118a, 118b) to transfer the I/O tags from the controller 102 to the control center device 104.

According to an embodiment of the present invention, the method comprises detecting whether the bandwidth of the primary transport layer 110 is below the normal range.

If a reduction in bandwidth is detected, then, communication is switched to secondary transport layer (112a, 112b) or secondary protocol (118a, 118b) based on the reduced bandwidth based on user input.

Further, at next step, I/O tags are transferred from the controller 102 to the control center device 104 via the secondary transport layer (112a, 112b) and/or the secondary protocol (118a, 118b).

The present invention solves a technical problem of failure in communication during the failure of a transport layer or a communication protocol. The present invention provides a system, wherein when a failure of a communication element such as transport layer or communication protocol is detected, the system automatically switches to a secondary transport layer or a secondary protocol thereby eliminating the failure of transfer of data between the controller and the control center device.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - Industrial control system
102A - 102N - Controller
104 - Control center device
106 - Communication network
108 - Transport layer
110 - Primary transport layer
112A, 112B - Secondary transport layer
114 - Communication protocol
116 - Primary protocol
118A, 118B - Secondary protocol
200 - schematic of an industrial control system with transport layer switching
300 - schematic of an industrial control system with transport layer and communication protocol switching
400 - schematic of an industrial control system with communication protocol switching
500 - flowchart of a method of switching transport layer in an industrial control system
600 - flowchart of a method of switching transport layer and communication protocol in an industrial control system
700 - flowchart of a method of switching communication protocol in an industrial control system
800 - flowchart of a method of switching transport layer or communication protocol in an industrial control system
900 - flowchart of a method of selecting a communication protocol in an industrial control system 100

## Claims

1. An industrial control system (100) with automated switching of a communication element comprising:
at least one controller (102)) connected with at least one field device;
a control center device (104) comprising at least one processor, wherein the control center device (104) is communicatively connected to the controller (102); and
a communication network (106) enabling bidirectional communication to transfer I/O tag data between the controller (102) and the control center device (104), wherein the communication network (106) comprises:
at least two transport layers (108) comprising one primary transport layer (110) and
at least one secondary transport layer (112a, 112b), wherein the transport layers are connected between the controller (102) and the control center device (104); and
a plurality of communication protocols (114) including one primary protocol (116) and at least one secondary protocol (118a, 118b) configured to enable communication via the transport layers;
**characterized in that**,
the control center device (104) is configured to:
detect failure of the primary transport layer (110) causing the failure of communication between the control center device (104) and the controller (102); and
if failure of the primary transport layer (110) is detected, the control center device (104) is configured to:
switch to one of the secondary transport layers (112a, 112b) to enable communication between the control center device (104) and the controller (102), wherein the I/O tags that are marked as critical is transferred between the control center device (104) and the controller (102) via the primary protocol (116) and the secondary transport layer (112a, 112b); or
switch to one of the secondary transport layers (112a, 112b) and one of the secondary protocols (118a, 118b), wherein the transfer of I/O tags between the control center device (104) and the controller (102) is enabled through the secondary transport layer (112a, 112b) and the secondary protocol (118a, 118b).

2. The system (100) according to claim 1, wherein the control center device (104) is configured to:
detect failure of the primary protocol (116) causing the failure of communication between the control center device (104) and the controller (102); and
if failure of the primary protocol (116) is detected, the control center device (104) is configured to:
switch to one of the secondary protocols (118a, 118b) to enable communication between the control center device (104) and the controller (102), wherein the I/O tags are transferred between the control center device (104) and the controller (102) via the secondary protocol (118a, 118b) and the primary transport layer (110).

3. The system (100) according to claim any of the preceding claims, wherein the control center device (104) is configured to:
map the I/O tags received from the controller (102) to a new set of I/O tags corresponding to the secondary protocol (118a, 118b) in the control center device (104) when the communication protocol has switched from a primary protocol (116) to the secondary protocol (118a, 118b).

4. The system (100) according to any of the preceding claims, wherein the control center device (104) is configured to:
mark the I/O tags that are critical based on user input, wherein when the bandwidth of the transport layer is reduced, I/O tags that are marked as critical are transferred from the controller (102) to the control center device (104).

5. The system (100) according to any of the preceding claims, wherein the control center device (104) is configured to:
detect failure of primary protocol (116);
if the failure of primary protocol (116) is detected:
select a secondary protocol (118a, 118b) by sequentially checking the health status of the secondary protocols (118a, 118b) until a healthy secondary protocol (118a, 118b) is identified and select the identified secondary protocol; and
transfer the I/O tags from controller (102) to the control center device (104) via the selected secondary protocol (118a, 118b).

6. The system (100) according to any of the preceding claims, wherein the control center device (104) is configured to:
check whether the failure of primary protocol (116) is corrected and communication through primary protocol (116) is possible, after switching to the secondary protocol; and
if the failure of primary protocol (116) is corrected and communication through primary protocol (116) is possible, switch to the primary protocol (116) for transferring I/O tags between the controller (102) and the control center device (104).

7. The system (100) according to any of the preceding claims, wherein the control center device (104) is configured to:
detect whether the bandwidth of the primary transport layer (110) is below the normal range;
if a reduction in bandwidth is detected, switch to one of the secondary protocols (118a, 118b) or one of the secondary transport layers (112a, 112b) based on user input; and
transfer I/O tags from the controller (102) to the control center device (104) via the secondary transport layer (112a, 112b) and/or the secondary protocol (118a, 118b).

8. A method for automated switching of a communication element in an industrial control system (100), wherein the method comprises:
enabling, using a communication network (106) comprising transport layers and
communication protocols (114), bidirectional communication to transfer I/O tags between a controller (102) and a control center device (104);
detecting, by the control center device (104), failure of a primary transport layer (110) causing the failure of communication between the control center device (104) and the controller (102); and
if failure of the primary transport layer (110) is detected:
switching to one of the secondary transport layers (112a, 112b) to enable communication between the control center device (104) and the controller (102),
wherein the I/O tags that are marked as critical is transferred between the control center device (104) and the controller (102) via the primary protocol (116) and the secondary transport layer (112a, 112b); or
switching to one of the secondary transport layers (112a, 112b) and one of the secondary protocols (118a, 118b), wherein the transfer of I/O tags between the control center device (104) and the controller (102) is enabled through the secondary transport layer (112a, 112b) and the secondary protocol (118a, 118b).

9. The method according to claim 8, wherein the method comprises:
detecting failure of the primary protocol (116) causing the failure of communication between the control center device (104) and the controller (102); and
if failure of the primary protocol (116) is detected:
switching to one of the secondary protocols (118a, 118b) to enable communication between the control center device (104) and the controller (102), wherein the I/O tags are transferred between the control center device (104) and the controller (102) via the secondary protocol (118a, 118b) and the primary transport layer (110).

10. The method according to claim 8 or 9, wherein the method comprises:
mapping the I/O tags received from the controller (102) to a new set of I/O tags corresponding to the secondary protocol (118a, 118b) in the control center device (104),
when the communication protocol has switched from a primary protocol (116) to the secondary protocol (118a, 118b).

11. The method according to claims 8, 9 or 10, wherein the method comprises:
marking the I/O tags that are critical based on user input, wherein when the bandwidth of the transport layer is reduced, I/O tags that are marked as critical are transferred from the controller (102) to the control center device (104).

12. The method according to any one of claims 8 to 11, wherein the method comprises:
detecting failure of the primary protocol (116);
if failure of primary protocol (116) is detected:
selecting a secondary protocol (118a, 118b) by sequentially checking the health status of the secondary protocols (118a, 118b) until a healthy secondary protocol (118a, 118b) is identified and select the identified secondary protocol; and
transferring the I/O tags from controller (102) to the control center device (104) via the selected secondary protocol (118a, 118b).

13. The method according to any one of claims 8 to 12, wherein the method comprises:
checking whether the failure of primary protocol (116) is corrected and communication through primary protocol (116) is possible, after switching to the secondary protocol; and
switching to primary protocol (116) for transferring I/O tags between the controller (102) and the control center device (104) if the failure of primary protocol (116) is corrected and
communication through primary protocol (116) is possible.

14. The method according to any one of claims 8 to 13, wherein the method comprises:
detecting whether the bandwidth of the primary transport layer (110) is below the normal range;
if a reduction in bandwidth is detected:
switching to one of the secondary protocols (118a, 118b) or secondary transport layers (112a, 112b) based on user input; and
transferring I/O tags from the controller (102) to the control center device (104) via the secondary transport layer (112a, 112b) and/or the secondary protocol (118a, 118b.
